# EUROPEAN PATENT APPLICATION

(11) **EP 2 157 797 A1**
(43) Date of publication of application: **24.02.2010**
(21) Application number: 08018068.0
(22) Date of filing: 15.10.2008
(51) Int. Cl.: H04N 7/26, G06T 3/60, G06T 1/60, H04N 7/50

(54) **Apparatus and method for video processing**

(30) Priority: 22.08.2008 US 196297
(71) Applicant: ALi Corporation, Taipei City Taiwan, R.O.C. (TW)
(72) Inventor: Chi, Fu-Chung, Taipei City (TW)
(74) Representative: Schaeberle, Steffen

(57) **Abstract**

An apparatus for video processing includes a video decoder (310), a storage device (340) and a rotation processing unit (320). The video decoder (310) is utilized for decoding encoded video data to generate video frame data. The storage device (340) is utilized for storing rotated video frame data. The rotation processing unit (320), which is coupled between the video decoder (310) and the storage device (340), is utilized for receiving the video frame data before the video frame data generated from the video decoder (310) are stored into the storage device (340), generating the rotated video frame data according to the video frame data, and then storing the rotated video frame data into the storage device (340).

## Description

The present invention relates to an apparatus and method for video processing according to the pre-characterizing clauses of claims 1 and 8.

In a personal media player (PMP), display images sometimes need to be rotated because a user may view the display images at different angles. Therefore, many techniques for displaying rotated images are developed.

In the prior art apparatus for video processing, a post-processing unit reads the video frame data from a DRAM and performs operations such as scaling, de-interlacing, alpha-blending etc. to output image data to an LCD (liquid crystal display). However, when an image needs to be rotated, the post-processing unit needs to read the video frame data stored in the DRAM many times to obtain a rotated video frame data, causing higher power consumption.

This in mind, the present invention aims at providing an apparatus and a method for video processing having lower power consumption than conventional methods and apparatus without increasing the layout area.

This is achieved by an apparatus according to claim 1 and a method according to claim 8. The dependent claims pertain to corresponding further developments and improvements.

As will be seen more clearly from the detailed description following below, an apparatus for video processing comprises a video decoder, a storage device and a rotation processing unit. The video decoder is utilized for decoding encoded video data to generate video frame data. The storage device is utilized for storing rotated video frame data. The rotation processing unit, which is coupled between the video decoder and the storage device, is utilized for receiving the video frame data before the video frame data generated from the video decoder are stored into the storage device, generating the rotated video frame data according to the video frame data, and then storing the rotated video frame data into the storage device.

In addition, as will be seen more clearly from the detailed description following below, a video processing method comprises: decoding encoded video data to generate video frame data; and receiving the video frame data before the video frame data are stored into a storage device, generating the rotated video frame data according to the video frame data, and then storing the rotated video frame data into the storage device.

In the following, the invention is further illustrated by way of example, taking reference to the accompanying drawings. Thereof
FIG. 1 is a prior art apparatus for video processing,
FIG. 2 is another prior art apparatus for video processing,
FIG. 3 is a diagram illustrating an apparatus for video processing according to one embodiment of the present invention,
FIG. 4 is a diagram illustrating the macro blocks of a video frame,
FIG. 5 is a diagram illustrating the macro blocks of a rotated video frame,
FIG. 6 is a diagram illustrating the relationship between M'(Y,X) and M(Y,X) shown in FIG. 4 and FIG. 5,
FIG. 7 is a diagram illustrating a first embodiment of the rotation processing unit shown in FIG. 3,
FIG. 8 is a diagram illustrating the operations of the rotation processing unit shown in FIG. 7 when the rotated video frame data is written into DRAM,
FIG. 9 is a diagram illustrating the operations of the rotation processing unit shown in FIG. 7 when the video decoder decodes the current video frame data,
FIG. 10 is a diagram illustrating a second embodiment of the rotation processing unit,
FIG. 11 is a diagram illustrating the operations of the rotation processing unit shown in FIG. 10 when the rotated video frame data is written into DRAM, and
FIG. 12 is a diagram illustrating the operations of the rotation processing unit shown in FIG. 10 when the video decoder decodes the current video frame data.

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ..." The terms "couple" and "couples" are intended to mean either an indirect or a direct electrical connection. Thus, if a first device couples to a second device, that connection may be through a direct electrical connection, or through an indirect electrical connection via other devices and connections.

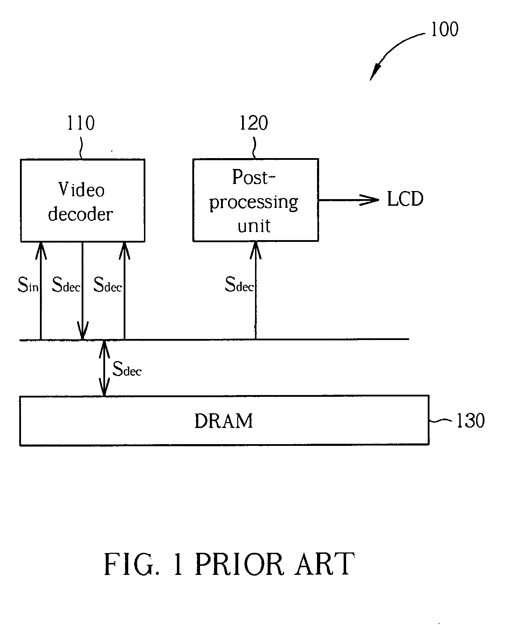

FIG. 1 is a prior art apparatus 100 for video processing. As shown in FIG. 1, the apparatus 100 includes a video decoder 110, a post-processing unit 120 and a DRAM (dynamic random access memory) 130. In the operations of the apparatus 100, the video decoder 110 receives an encoded video data Sᵢₙ to generate a video frame data S_{dec}, and the video frame data S_{dec} is stored into the DRAM 130. Then, the video decoder 110 reads the video frame data S_{dec} from the DRAM 130, and decodes next video frame data based on the current video frame data S_{dec}. The post-processing unit 120 also reads the video frame data S_{dec} from the DRAM 1 30 and performs operations such as scaling, de-interlacing, alpha-blending etc. to output image data to an LCD (liquid crystal display). However, when an image needs to be rotated, because the post-processing unit 120 reads the video frame data S_{dec} in a line-based mode, the post-processing unit 120 needs to read the video frame data S_{dec} stored in the DRAM 130 many times to obtain a rotated video frame data.

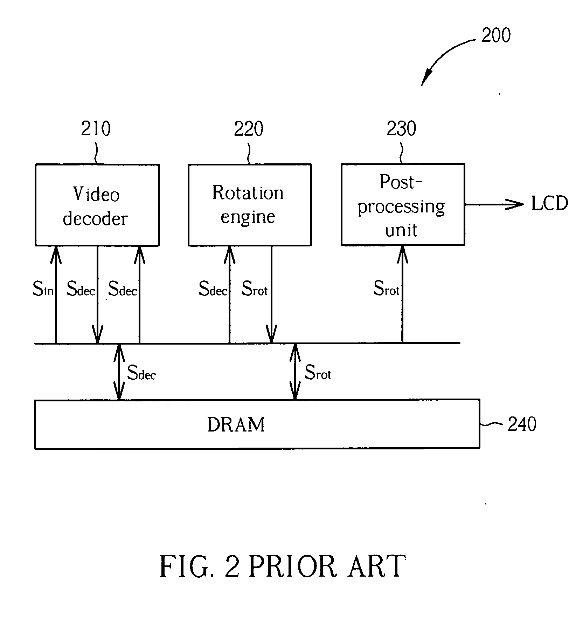

FIG. 2 is a prior art apparatus 200 for video processing. As shown in FIG. 2, the apparatus 200 includes a video decoder 210, a rotation engine 220, a post-processing unit 230 and a DRAM 240. In the operations of the apparatus 200, when an image needs to be rotated, the video decoder 210 receives an encoded video data Sᵢₙ to generate a video frame data S_{dec}, and the video frame data S_{dec} is stored into the DRAM 240. Then, the video decoder 210 reads the video frame data S_{dec} from the DRAM 240, and decodes next video frame data based on the current video frame data S_{dec}. The rotation engine 220 also reads the video frame data S_{dec} from the DRAM 240 and a rotated video frame data Sᵣₒₜ generated from the rotation engine 220 is stored into the DRAM 240. Then, the post-processing unit 230 reads the rotated video frame data Sᵣₒₜ from the DRAM 240 and performs operations such as scaling, de-interlacing, alpha-blending etc. to output the rotated image data to an LCD (liquid crystal display). However, in the apparatus 200, the DRAM 240 is accessed twice when displaying the rotated image, causing higher power consumption.

In another prior art apparatus for video processing, a line buffer may be added between the rotation engine 220 and the post-processing unit, for storing the rotated video frame data generated from the rotation engine 220. In this technique, the DRAM 240 is only accessed once when displaying the rotated image; however, the line buffer requires a large layout area.

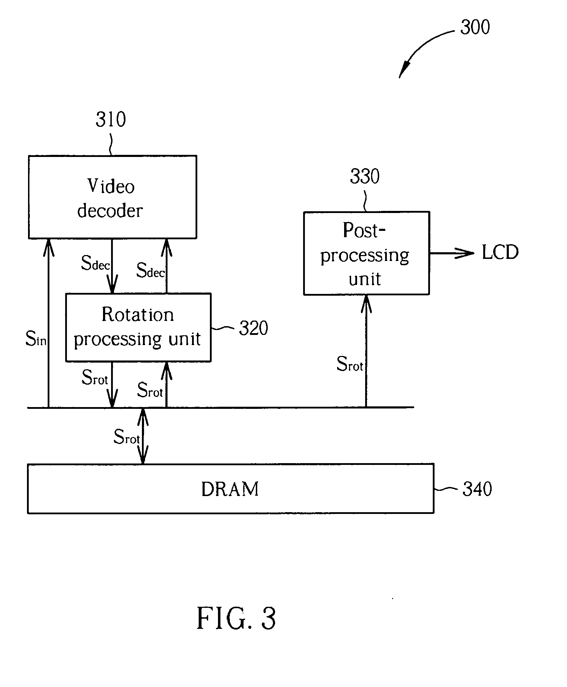

FIG. 3 is a diagram illustrating an apparatus 300 for video processing according to one embodiment of the present invention. As shown in FIG. 3, the apparatus 300 includes a video decoder 310, a rotation processing unit 320, a post-processing unit 330 and a DRAM 340. In the operations of the apparatus 300, when an image needs to be rotated, the video decoder 310 decodes an encoded video data Sᵢₙ to generate a video frame data S_{dec}, the rotation processing unit 320 generates a rotated video frame data Sᵣₒₜ according to the video frame data S_{dec}, and then the rotated video frame data Sᵣₒₜ is stored into the DRAM 340. After that, the post-processing unit 330 reads the rotated video frame data Sᵣₒₜ from the DRAM 340 and performs operations such as scaling, de-interlacing, alpha-blending etc. to output display data to an LCD.

In addition, in video decoding processing, some video frame data can be generated based on their corresponding encoded video data. However, some video frame data need to be generated based on their previous video frame data. Therefore, in this embodiment, the rotation processing unit 320 further reads the rotated video frame data Sᵣₒₜ from the DRAM 340 and performs an inverse rotated operation on the rotated video frame data Sᵣₒₜ to generate the non-rotated video frame data (i.e., video frame data S_{dec}), and the video decoder 310 decodes current video frame data based on the previous video frame data.

In the apparatus 300, when an image needs to be rotated, the DRAM 340 only needs to be accessed once, therefore, the power consumption is lower than that of the prior art apparatuses 100 and 200.

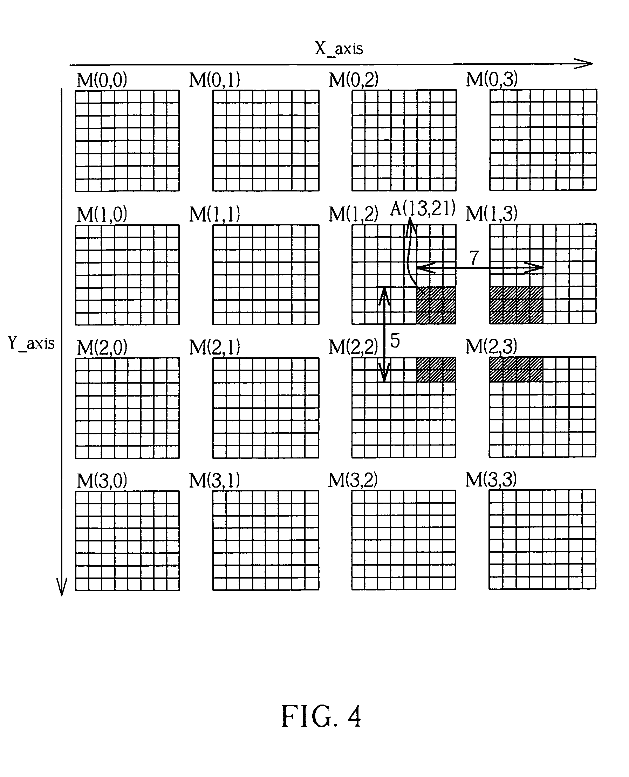

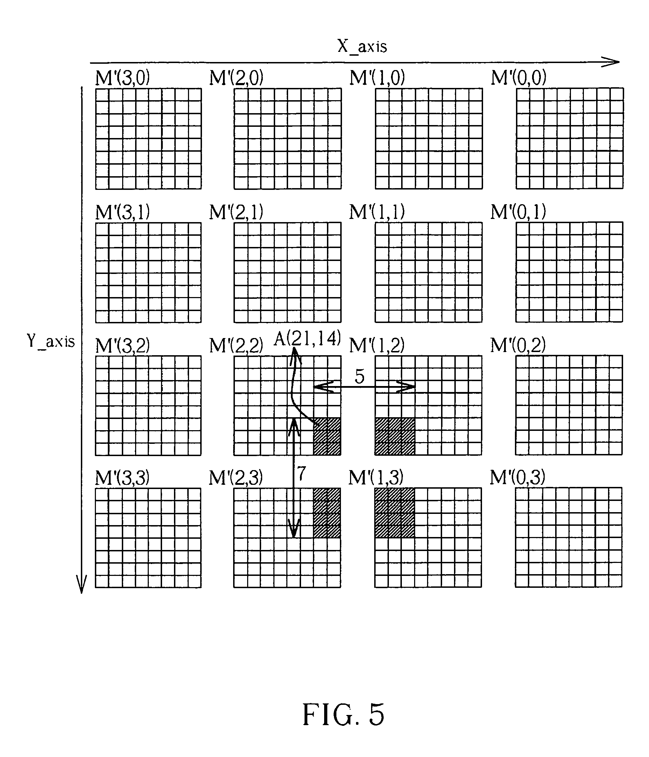

In the detailed operations of the apparatus 300, taking video compression standards MPEG (Moving Picture Experts Group), DIVX (Digital Video Express), H264 as examples, the video decoder 310 decodes the encoded video data Sᵢₙ and a plurality of macro blocks of the video frame data S_{dec} are sequentially generated, where each macro block includes a plurality of pixel data of a pixel array. FIG. 4 is a diagram illustrating the macro blocks of a video frame. In practice, each macro block includes 16*16 pixel data, however, to clearly and simply describe the embodiment, the video frame shown in FIG. 4 is divided into sixteen macro blocks M(0,0), M(0,1), ..., M(3,3), and each macro block includes 8*8 pixel data. Please note that, a number of the macro blocks and a size of the macro block shown in FIG. 4 are for illustrative purposes only, and are not meant to be limitations of the present invention. When the image needs not to be rotated, the sequence of the macro blocks written into the DRAM 340 is M(0,0), M(0,1), M(0,2), M(0,3), M(1,0), M(1,1), M(1,2), M(1,3), M(2,0), M(2,1), M(2,2), M(2,3), M(3,0), M(3,1), M(3,2), M(3,3). In addition, when the image needs to be rotated 90 degrees clockwise, the sequence of the macro blocks written into the DRAM 340 is M'(0,0), M'(0,1), M'(0,2), M'(0,3), M'(1,0), M'(1,1), M'(1,2), M'(1,3), M'(2,0), M'(2,1), M'(2,2), M'(2,3), M'(3,0), M'(3,1), M'(3,2), M'(3,3) shown in FIG. 5, where M'(Y,X) is M(Y,X) rotated 90 degrees clockwise. Please note that, the coordinates of the macro blocks M(0,0), M(0,1), ..., M(3,3) is different from the that of the macro blocks M'(0,0), M'(0,1), ..., M'(3,3).

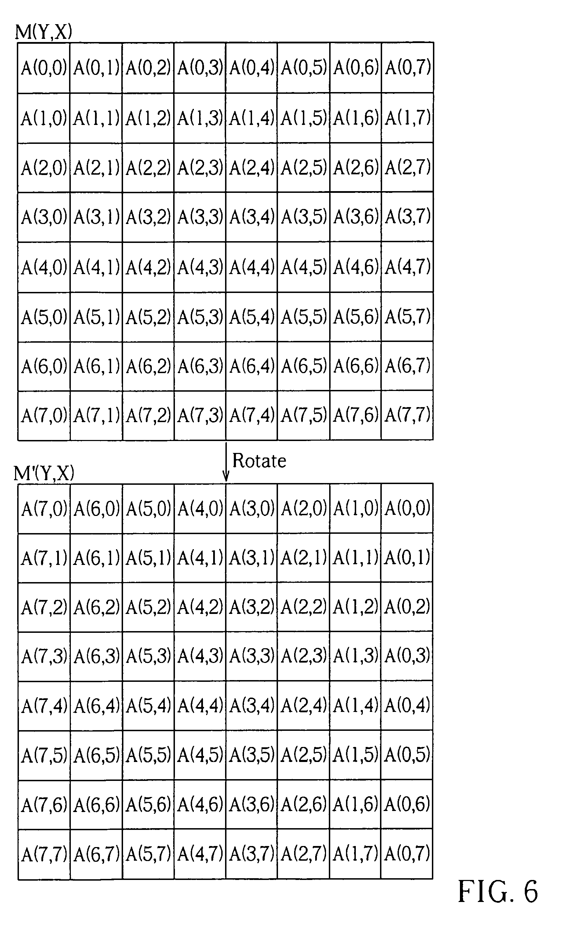

FIG. 6 is a diagram illustrating the relationship between M'(Y,X) and M(Y,X). As shown in FIG. 6, A(0,0), A(0,1), A(0,2), ..., A(7,7) are pixel data in the macro block M(Y,X), and when the image needs not to be rotated, the sequence of the pixel data written into the DRAM 340 is A(0,0), A(0,1), A(0,2), ..., A(0,7), A(1,0), A(1,1), A(1,2), ..., A(1,7), A(2,0), A(2,1), A(2,2), ..., A(2,7), ..., A(7,0), A(7,1), A(7,2), ..., A(7,7). When the image needs to be rotated 90 degrees clockwise, the sequence of the pixel data written into the DRAM 340 is A(7,0), A(6,0), A(5,0), ..., A(0,0), A(7,1), A(6,1), A(5,1), ..., A(0,1), A(7,2), A(6,2), A(5,2), ..., A(0,2), A(7,7), A(6,7), A(5,7), ..., A(0,7). For simplicity, the pixel data is written into the DRAM 340 from left to right and line by line.

Please refer to FIG. 4 and FIG. 5. In this embodiment, when pixel data of a specific image (a shadow area shown in FIG. 4) needs to be read from the DRAM 340 for further operations, because what is stored in the DRAM 340 is the rotated video frame data (as shown in FIG. 5), it is important to take notice of an initial pixel data, length and width of the specific image. For example, a shadow area shown in FIG. 5 is a rotated specific image of the specific image shown in FIG. 4. Therefore, an initial pixel data to be read, a number of lines and a number of pixel data of each line (i.e., length and width of the specific image) need to be modified. For example, in FIG. 4, the initial pixel data of the specific image (shadow area) is A(13, 21), and the length is equal to five pixels and the width is equal to seven pixels; besides, the initial pixel data of the rotated specific image (shadow area shown in FIG. 5) is A(21, 14), and the length is equal to seven pixels and the width is equal to five pixels. When the specific image needs to be read from the DRAM 340 for further operations, the pixel data A(21, 14) in the DRAM 340 is firstly read, and pixel data are sequentially read from left to right and line-by-line, where the shadow area shown in FIG. 5 have seven lines and each line includes five pixel data.

It is noted that the above-mentioned operations of the apparatus 300 and FIG.4-FIG.6 are for displaying an image rotated 90 degrees clockwise. However, a person skilled in this art can easily apply the operations of the apparatus 300 for displaying an image rotated 180 or 270 degrees clockwise.

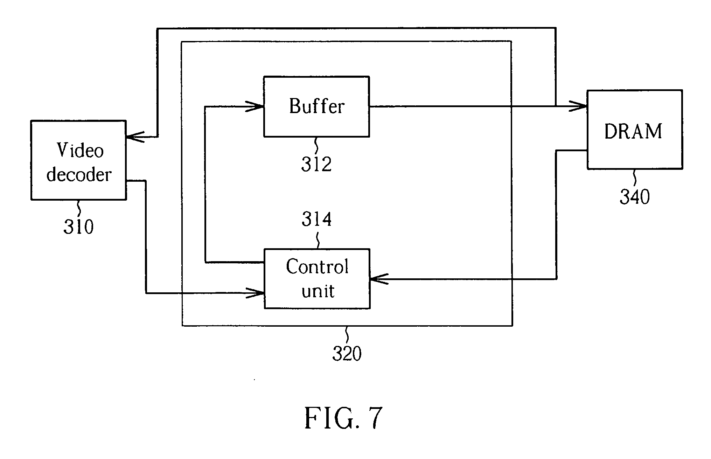

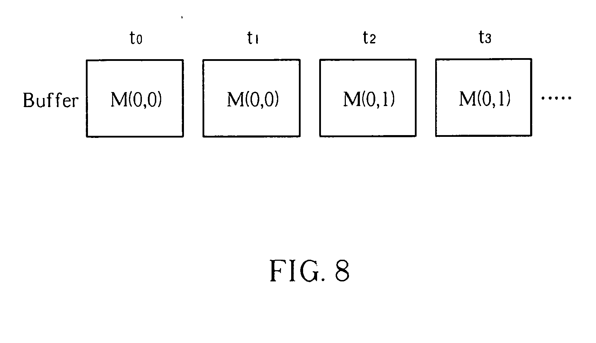

Please refer to FIG. 7. FIG. 7 is a diagram illustrating a first embodiment of the rotation processing unit 320. As shown in FIG. 7, the rotation processing unit 320 includes a buffer 312 and a control unit 314. The buffer 312 is utilized for buffering the video frame data generated from the video decoder 310, and for buffering the rotated video frame data read from the DRAM 340. Please refer to FIG. 4-FIG.8 together, FIG. 8 is a diagram illustrating the operations of the rotation processing unit 320 shown in FIG. 7 when the rotated video frame data is written into DRAM 340. In the detailed operations of the rotation processing unit 320, when the image needs to be rotated 90 degrees clockwise, first, at time to, according to the above-mentioned sequence of the macro blocks written into the DRAM 340, the macro block M(0,0) generated from the video decoder 310 is written into the buffer 312, and at time t₁, the rotation processing unit 320 reads the data stored in the buffer 312 and transmits the pixel data of the macro block M(0,0) to the DRAM 340 according to the above-mentioned sequence of the pixel data written into the DRAM 340 (i.e., A(7,0), A(6,0), A(5,0), ..., A(0,0), A(7,1), A(6,1), A(5,1), ..., A(0,1), A(7,2), A(6,2), A(5,2), ..., A(0,2), A(7,7), A(6,7), A(5,7), ..., A(0,7)). That is, M(0,0) has a rotation operation performed so that M'(0,0) is stored into the DRAM 340. Then, at time t₂, M(0,1) is written into the buffer 312, and at time t₃, the rotation processing unit 320 reads the data stored in the buffer 312 and transmits the pixel data of the macro block M(0,1) to the DRAM 340 according to the above-mentioned sequence of the pixel data written into the DRAM 340. The following macro blocks are written into the buffer 312 according to the above-mentioned operations until all the macro blocks of the video frame are stored into the DRAM 340.

When the video decoder 310 decodes current video frame data based on the previous video frame data, the rotation processing unit 320 needs to read the rotated video frame data from the DRAM 340 and generate the non-rotated video frame data to the video decoder 310. In detail, when a macro block of the current video frame needs to be decoded, it is required to obtain a reference macro block of the previous video frame data according to the size of the macro block of the current video frame and a motion vector, where the motion vector is defined as a displacement between the macro block and the reference macro block. Beside, a size of the reference macro block may be equal to or larger than the macro block. Then, the video decoder 310 decodes the macro block of current video frame data based on the reference macro block of the previous video frame data. In addition, because the reference macro block is read from the DRAM 340 and what is stored in the DRAM 340 is the rotated video frame data, therefore, a rotated reference macro block is read from the DRAM 340, and the rotated reference macro block then undergoes inverse rotation to generate the non-rotated reference macro block. The above operations are similar to the operations of the specific image shown in FIG. 4 and FIG. 5, and further descriptions are therefore omitted here.

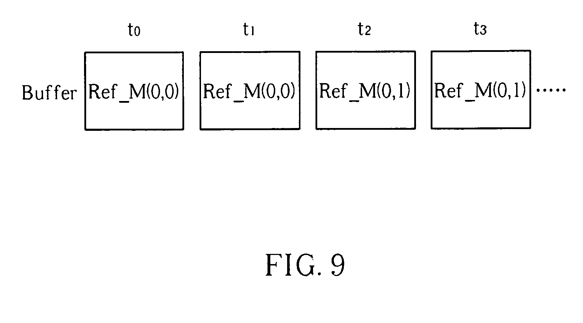

Please refer to FIG .9. FIG. 9 is a diagram illustrating the operations of the rotation processing unit 320 shown in FIG. 7 when the video decoder 310 decodes the current video frame data. In the detailed operations of the rotation processing unit 320, first, at time to when the macro block M(0,0) of the current video frame is to be decoded, the rotation processing unit 320 reads a rotated reference macro block Ref_M'(0,0) of the previous rotated video frame from the DRAM 340 in a sequence that Ref_M'(0,0) is performed inverse rotated operation (in this embodiment, 90 degrees counter-clockwise) to obtain a reference macro block Ref_M (0,0), and the reference macro block Ref_M (0,0) of the previous video frame is written into the buffer 312, and at time t₁, Ref_M(0,0) is transmitted to the video decoder 310. Then, the video decoder 310 decodes the macro block M(0,0) of the current video frame based on the reference macro block Ref_M(0,0) of the previous video frame. In addition, Then, at time t₂ when the macro block M(0,1) of the current video frame is to be decoded, the rotation processing unit 320 reads a rotated reference macro block Ref_M'(0,1) from the DRAM 340 in a sequence that Ref_M'(0,1) is performed inverse rotated operation (in this embodiment, 90 degrees counter-clockwise) to obtain a reference macro block Ref_M (0,1), and the reference macro block Ref_M (0,1) of the previous frame is written into the buffer 312. At time t₃, Ref_M(0,1) is transmitted to the video decoder 310. Then, the video decoder 310 decodes the macro block M(0,1) of the current video frame based on the referefnce macro block Ref_M(0,1) of the previous video frame. When the following macro blocks of the current frame need to be decoded, the video decoder 310 can obtain the corresponding macro blocks of the previous frame according to the above-mentioned operations.

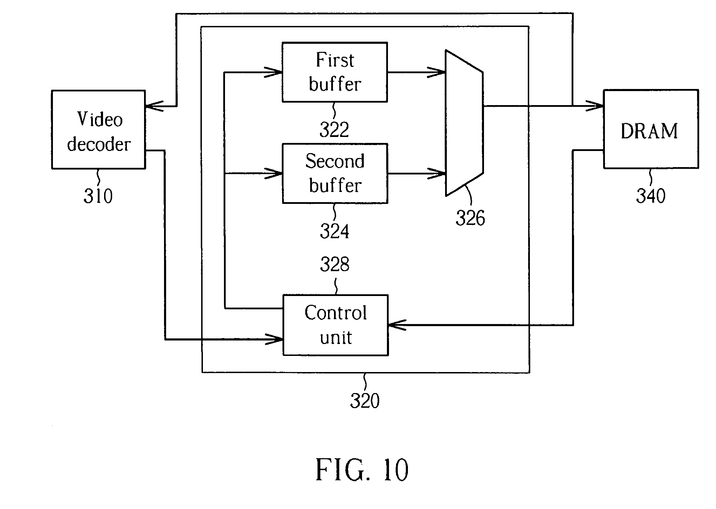

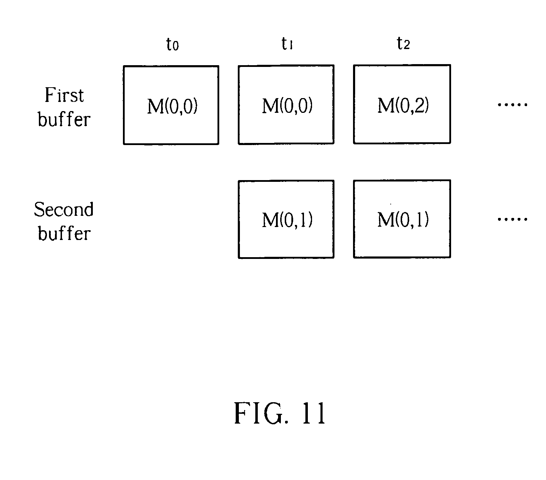

Please refer to FIG. 10. FIG. 10 is a diagram illustrating a second embodiment of the rotation processing unit 320. As shown in FIG. 10, the rotation processing unit 320 includes a first buffer 322, a second buffer 324, a multiplexer 326 and a control unit 328. The first and second buffers 322 and 324 are utilized for alternately buffering the video frame data generated from the video decoder 310, and for alternately buffering the rotated video frame data read from the DRAM 340. Please refer to FIG. 4-FIG.6 and FIG.10-FIG. 11 together. FIG. 11 is a diagram illustrating the operations of the rotation processing unit 320 shown in FIG. 10 when the rotated video frame data is written into DRAM 340. In the detailed operations of the rotation processing unit 320, when the image needs to be rotated 90 degrees clockwise, first, at time to, according to the above-mentioned sequence of the macro blocks written into the DRAM 340, the macro block M(0,0) generated from the video decoder 310 is written into the first buffer 322, and at time t₁, the rotation processing unit 320 reads the data stored in the first buffer 322 and transmits the pixel data of the macro block M(0,0) to the DRAM 340 according to the above-mentioned sequence of the pixel data written into the DRAM 340 (i.e., A(7,0), A(6,0), A(5,0), ..., A(0,0), A(7,1), A(6,1), A(5,1), ..., A(0,1), A(7,2), A(6,2), A(5,2), ..., A(0,2), A(7,7), A(6,7), A(5,7), ..., A(0,7)). That is, M(0,0) has a rotation operation performed so that M'(0,0) is stored into the DRAM 340. At the same time (time t₁), M(0,1) is written into the second buffer 324. Then, at time t₂, the rotation processing unit 320 reads the data stored in the second buffer 324 and transmits the pixel data of the macro block M(0,1) to the DRAM 340 according to the above-mentioned sequence of the pixel data written into the DRAM 340; that is, M'(0,1) is stored into the DRAM 340. Similarly, at the same time (time t₂), M(0,2) is written into the first buffer 322. The following macro blocks are written into the first or second buffers 322 or 324 according to the above-mentioned operations until all the macro blocks of the video frame are stored into the DRAM 340.

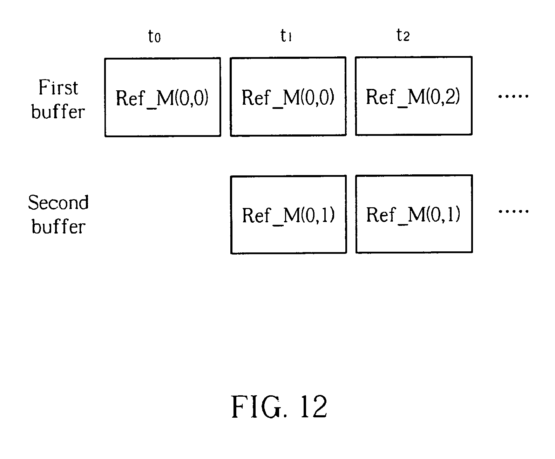

When the video decoder 310 decodes current video frame data based on the previous video frame data, the rotation processing unit 320 needs to read the rotated video frame data from the DRAM 340 and generate the non-rotated video frame data to the video decoder 310. FIG. 12 is a diagram illustrating the operations of the rotation processing unit 320 shown in FIG. 10 when the video decoder 310 decodes the current video frame data. In the detailed operations of the rotation processing unit 320, first, at time to when the macro block M(0,0) of the current video frame is to be decoded, the rotation processing unit 320 reads the rotated reference macro block Ref_M'(0,0) from the DRAM 340 in a sequence that Ref_M'(0,0) is performed inverse rotated operation (in this embodiment, 90 degrees counter-clockwise) to obtain a reference macro block Ref_M (0,0), and the reference macro block Ref_M (0,0) of the previous video frame is written into the first buffer 322, and at time t₁ Ref_M(0,0) is transmitted to the video decoder 310 and the video decoder 310 decodes the macro block M(0,0) of the current video frame based on the reference macro block Ref_M(0,0) of the previous video frame. At the same time (time t₁), reference macro block Ref_M(0,1) is written into the second buffer 324. Then, at time t₂ Ref_M(0,1) is transmitted to the video decoder 310, and the video decoder 310 decodes the macro block M(0,1) of the current video frame based on the reference macro block Ref_M(0,1) of the previous video frame. Similarly, at the same time (time t₂), a reference macro block Ref_M(0,2) is written into the first buffer 322. When the following macro blocks of the current frame need to be decoded, the video decoder 310 can obtain the corresponding reference macro blocks of the previous frame according to the above-mentioned operations.

In addition, in the rotation processing unit 320 shown in FIG. 7 and FIG. 10, the control units 314 and 328 are utilized to control the operations of the rotation processing unit 320. The multiplexer 326 is utilized for selectively transmitting the stored data to the video decoder 310 or the DRAM 340.

It is noted that, in the above embodiments of the rotation processing unit 320 and related operations shown in FIG. 7-FIG. 12, the rotation operations are performed between the buffer and the DRAM 340. However, in another embodiment of the present invention, the rotation operations can be performed between the video decoder 310 and the buffer.

It is noted that, quantity of the buffers shown in FIG. 7 and FIG. 10 are for illustrative purposes only. A person skilled in this art can easily apply more buffers in the rotation processing unit 320 after reading the above-mentioned operations.

In addition, in the operations of the apparatus 300, when an image needs not to be rotated, the video frame data S_{dec} generated from the video decoder 310 is stored into the DRAM 340, that is, the rotation processing unit simply bypasses the video frame data S_{dec} generated from the video decoder 310, and the post-processing unit 330 reads the video frame data S_{dec} from the DRAM 340 and outputs the display data to the LCD.

According to the above disclosure of the present invention, when the image needs to be rotated, the rotated video frame data is stored into the DRAM; and when the image needs not to be rotated, the non-rotated video frame data is stored into the DRAM. Therefore, no matter the image needs to be rotated or not, the post-processing unit 330 can read the data in the DRAM 340 according to the same sequence of the pixel data read out from the DRAM (e.g., from left to right and line by line).

Briefly summarized, in the present invention, when an image needs to be rotated, the rotation processing unit receives the video frame data and generates the rotated video frame data according to the video frame data, and the rotated video frame data are stored into the DRAM. Therefore, the post-processing unit can directly read the data in the DRAM and correctly output a display image to the LCD. In addition, in the apparatus for video processing provided by the present invention, when showing the rotated image, the DRAM only needs to be accessed once, and the power consumption is therefore lower.

All combinations and sub-combinations of above-described features also belong to the invention.

## Claims

1. An apparatus (300) for video processing, comprising:
a video decoder (310), for decoding encoded video data to generate video frame data;
a storage device (340), for storing rotated video frame data; and
**characterized by**:
a rotation processing unit (320), coupled between the video decoder (310) and the storage device (340), for receiving the video frame data before the video frame data generated from the video decoder (310) are stored into the storage device (340), generating the rotated video frame data according to the video frame data, and then storing the rotated video frame data into the storage device (340).

2. The apparatus of claim 1, **characterized in that** the rotation processing unit (320) comprises:
a buffer (312), for buffering the video frame data generated from the video decoder (310).

3. The apparatus of claim 1, **characterized in that** the rotation processing unit (320) comprises:
a plurality of buffers (322, 324), for alternately buffering the video frame data generated from the video decoder (310).

4. The apparatus of claim 1, **characterized in that** the rotation processing unit (320) further reads the rotated video frame data from the storage device (340) and generates the video frame data according to the rotated video frame data read from the storage device (340), and the video decoder (310) further decodes current video frame data based on previous video frame data generated from the rotation processing unit (320).

5. The apparatus of claim 4, **characterized in that** the rotation processing unit (320) comprises:
a buffer (312), for buffering the rotated video frame data read from the storage device (340).

6. The apparatus of claim 4, **characterized in that** the rotation processing unit (320) comprises:
a plurality of buffers (322, 324), for alternately buffering the rotated video frame data read from the storage device (340).

7. The apparatus of claim 6, **characterized in that** the buffers (322, 324) alternately buffer the rotated video frame data during a first period; and the buffers are utilized for alternately buffering the video frame data generated from the video decoder (310) during a second period different from the first period.

8. A video processing method, comprising:
decoding encoded video data to generate video frame data; and
**characterized by**:
receiving the video frame data before the video frame data are stored into a storage device, generating rotated video frame data according to the video frame data, and then storing the rotated video frame data into the storage device.

9. The method of claim 8, **characterized in that** the step of receiving the video frame data before the video frame data are stored into the storage device comprises:
utilizing a buffer to buffer the video frame data.

10. The method of claim 8, **characterized in that** the step of receiving the video frame data before the video frame data are stored into the storage device comprises:
utilizing a plurality of buffers to alternately buffer the video frame data.

11. The method of claim 8, **characterized in that** the method further comprises:
reading the rotated video frame data from the storage device;
generating the video frame data according to the rotated video frame data read from the storage device; and
decoding current video frame data based on previous video frame data generated from the rotated video frame data read from the storage device.

12. The method of claim 11, **characterized in that** the method further comprises:
utilizing a buffer to buffer the rotated video frame data read from the storage device where the buffered rotated video frame data is utilized for decoding the next video frame data.

13. The method of claim 11, **characterized in that** the method further comprises:
utilizing a plurality of buffers to alternately buffer the rotated video frame data read from the storage device.

14. The method of claim 13, **characterized in that** the buffers alternately buffer the video frame data during a first period; and the step of receiving the video frame data before the video frame data are stored into the storage device comprises:
utilizing the buffers to alternately buffer the rotated video frame data to be stored into the storage device during a second period different from the first period.

## Amended claims

### Amended claims in accordance with Rule 137(2) EPC.

**1.** An apparatus (300) for video processing, comprising:
a video decoder (310), for decoding encoded video data to generate video frame data;
a storage device (340), for storing rotated video frame data; and
**characterized by**:
a rotation processing unit (320), coupled between the video decoder (310) and the storage device (340), for receiving the video frame data before the video frame data generated from the video decoder (310) are stored into the storage device (340), generating the rotated video frame data according to the video frame data, and then storing the rotated video frame data into the storage device (340), wherein the rotation processing unit (320) further reads the rotated video frame data from the storage device (340) and generates the video frame data according to the rotated video frame data read from the storage device (340), and the video decoder (310) further decodes current video frame data based on previous video frame data generated from the rotation processing unit (320).

**2.** The apparatus of claim 1, **characterized in that** the rotation processing unit (320) comprises:
a buffer (312), for buffering the video frame data generated from the video decoder (310).

**3.** The apparatus of claim 1, **characterized in that** the rotation processing unit (320) comprises:
a plurality of buffers (322, 324), for buffering the video frame data generated from the video decoder (310).

**4.** The apparatus of claim 1, **characterized in that** the rotation processing unit (320) comprises:
a buffer (312), for buffering the rotated video frame data read from the storage device (340).

**5.** The apparatus of claim 1, **characterized in that** the rotation processing unit (320) comprises:
a plurality of buffers (322, 324), for buffering the rotated video frame data read from the storage device (340).

**6.** The apparatus of claim 5, **characterized in that** the buffers (322, 324) buffer the rotated video frame data during a first period; and the buffers are utilized for buffering the video frame data generated from the video decoder (310) during a second period different from the first period.

**7.** A video processing method, comprising:
decoding encoded video data to generate video frame data; and
**characterized by**:
receiving the video frame data before the video frame data are stored into a storage device, generating rotated video frame data according to the video frame data, and then storing the rotated video frame data into the storage device;
reading the rotated video frame data from the storage device;
generating the video frame data according to the rotated video frame data read from the storage device; and
decoding current video frame data based on previous video frame data generated from the rotated video frame data read from the storage device.

**8.** The method of claim 7, **characterized in that** the step of receiving the video frame data before the video frame data are stored into the storage device comprises:
utilizing a buffer to buffer the video frame data.

**9.** The method of claim 7, **characterized in that** the step of receiving the video frame data before the video frame data are stored into the storage device comprises:
utilizing a plurality of buffers to buffer the video frame data.

**10.** The method of claim 7, **characterized in that** the method further comprises:
utilizing a buffer to buffer the rotated video frame data read from the storage device where the buffered rotated video frame data is utilized for decoding the next video frame data.

**11.** The method of claim 7, **characterized in that** the method further comprises:
utilizing a plurality of buffers to buffer the rotated video frame data read from the storage device.

**12.** The method of claim 11, **characterized in that** the buffers buffer the video frame data during a first period; and the step of receiving the video frame data before the video frame data are stored into the storage device comprises:
utilizing the buffers to buffer the rotated video frame data to be stored into the storage device during a second period different from the first period.
